# FASCICULE DE BREVET EUROPEEN

(11) **EP 2 106 983 B1**
(45) Date de publication et mention de la délivrance du brevet: **03.07.2013**
(21) Numéro de dépôt: 09157214.9
(22) Date de dépôt: 02.04.2009
(51) Int. Cl.: B61D 17/02, B61F 1/10, B62D 35/02

(54) **Dispositif de perturbation du flux d'air circulant sous le châssis d'un véhicule ferroviaire**
Störvorrichtung des unter dem Fahrgestell eines Schienenfahrzeugs zirkulierenden Luftstroms
Device for disturbing the air flow circulating beneath the chassis of a railway vehicle

(30) Priorité: 02.04.2008 FR 0852168
(43) Date de publication de la demande: 07.10.2009
(73) Titulaire: ALSTOM Transport SA, 92300 Levallois-Perret (FR)
(72) Inventeur: Guilloteau, Emmanuel, 17440, AYTRE (FR); Soua, Brahim, 75018, PARIS (FR)
(74) Mandataire: Blot, Philippe Robert Emile

(56) Documents cités:
- EP-A- 1 052 154
- EP-A- 1 852 326
- DE-A1- 3 925 808
- DE-A1- 4 419 798
- US-B1- 6 276 636

## Description

La présente invention concerne un véhicule ferroviaire du type comprenant au moins une cavité destinée à recevoir un bogie de support du véhicule ferroviaire, ledit bogie étant destiné à s'étendre sensiblement transversalement dans ladite cavité.

Les véhicules ferroviaires sont supportés par au moins deux bogies qui sont disposés dans deux cavités prévues à chaque partie extrême du châssis du véhicule ferroviaire.

De telles cavités créent des perturbations dans le flux d'air circulant sous le véhicule ferroviaire, lorsque celui-ci se déplace, notamment à grande vitesse. Ces perturbations, survenant lorsque l'air s'engouffre dans les cavités, créent des nuisances sonores qui sont gênantes pour la population à l'extérieur du véhicule ferroviaire. Ce problème devient particulièrement important lorsque le véhicule ferroviaire se déplace en milieu urbain ou dans des zones habitées.

Afin de pallier cet inconvénient, des matériaux d'absorption acoustique sont généralement disposés dans les cavités de réception des bogies.

Cependant, l'ajout de tels matériaux n'apporte pas une absorption acoustique optimale, tout en augmentant de manière non négligeable la masse du véhicule ferroviaire. De plus, ces matériaux sont coûteux et compliquent la construction du châssis en augmentant le nombre d'étapes de production. D'autre part, différentes saletés, telles que des poussières de garniture de freinage par exemple, sont susceptibles de s'accumuler dans la cavité de bogie et peuvent, dans la durée, réduire l'efficacité de ce type de matériaux. Enfin, la présence de ce type de matériaux ne facilite pas les opérations de maintenance du bogie et des éléments disposés dans la cavité.

Le document EP 1 852 326 A2 décrit l'ajout à une cavité de bogie de volets s'étendant sur toute la largeur de la cavité afin de modifier l'engouffrement de l'air dans celle-ci.

Le document DE 44 19 798 A1 décrit quant à lui l'ajout de pièces crénelées s'étendant sur toute la longueur des cavités de bogie.

L'un des buts de l'invention est de pallier ces inconvénients en proposant un véhicule ferroviaire du type précité, dans lequel les bruits générés par les perturbations de l'écoulement sous châssis sont réduits de façon efficace sans ajout particulier de matériaux dans ces cavités.

A cet effet, l'invention concerne un véhicule ferroviaire du type précité, dans lequel le châssis comprend au moins un dispositif de perturbation modifiant la forme de ladite cavité ou du voisinage de ladite cavité, ledit dispositif étant agencé pour modifier les flux d'air tourbillonnants se formant dans la cavité lors du déplacement du véhicule ferroviaire.

Selon d'autres caractéristiques du véhicule ferroviaire :
- la cavité comprend au moins une paroi amont et une paroi aval selon le sens de déplacement du véhicule ferroviaire, lesdites parois étant sensiblement verticales et s'étendant sensiblement transversalement, le bogie étant destiné à être disposé entre lesdites parois, ledit dispositif de perturbation étant prévu sur ou au voisinage de la paroi amont ;
- le dispositif de perturbation comprend au moins une encoche pratiquée dans la paroi amont, ladite encoche s'étendant selon une direction sensiblement longitudinale et traversant le bord inférieur de ladite paroi amont ;
- l'encoche s'étend à partir d'une surface inférieure sensiblement horizontale formant un coin avec le bord inférieur de la paroi amont, ladite encoche débouchant dans la paroi amont de sorte à supprimer la continuité de l'arête vive formée par ledit coin ;
- l'encoche présente une longueur sensiblement comprise entre 50 mm et 200 mm ;
- l'encoche présente une longueur de l'ordre de 100 mm ;
- le dispositif comprend une pluralité d'encoches réparties dans la paroi amont ;
- le dispositif de perturbation comprend une surface rugueuse prévue sur la surface inférieure du châssis au voisinage de la paroi amont ;
- le dispositif de perturbation comprend au moins un élément faisant saillie de la surface inférieure du châssis au voisinage de la paroi amont ; et
- le dispositif de perturbation comprend une pluralité d'éléments faisant saillie de la surface inférieure du châssis au voisinage de la paroi amont, de sorte à conférer une forme similaire à des créneaux au bord inférieur de la paroi amont.

D'autres aspects et avantages de l'invention apparaîtront à la lecture de la description qui suit, donnée à titre d'exemple et faite en référence aux dessins annexés dans lesquels :
- la Figure 1 est une représentation schématique en coupe de l'avant d'un véhicule ferroviaire selon l'invention,
- la Figure 2 est une représentation schématique en perspective, vue de dessous, d'une partie d'une cavité de réception d'un bogie selon l'invention.

Dans la description, les termes « longitudinal », « transversal », « supérieur », « inférieur », etc. sont définis par rapport aux directions usuelles d'un véhicule ferroviaire disposé sur des rails et les termes « amont » et « aval » sont définis par rapport à la direction de circulation de ce véhicule ferroviaire.

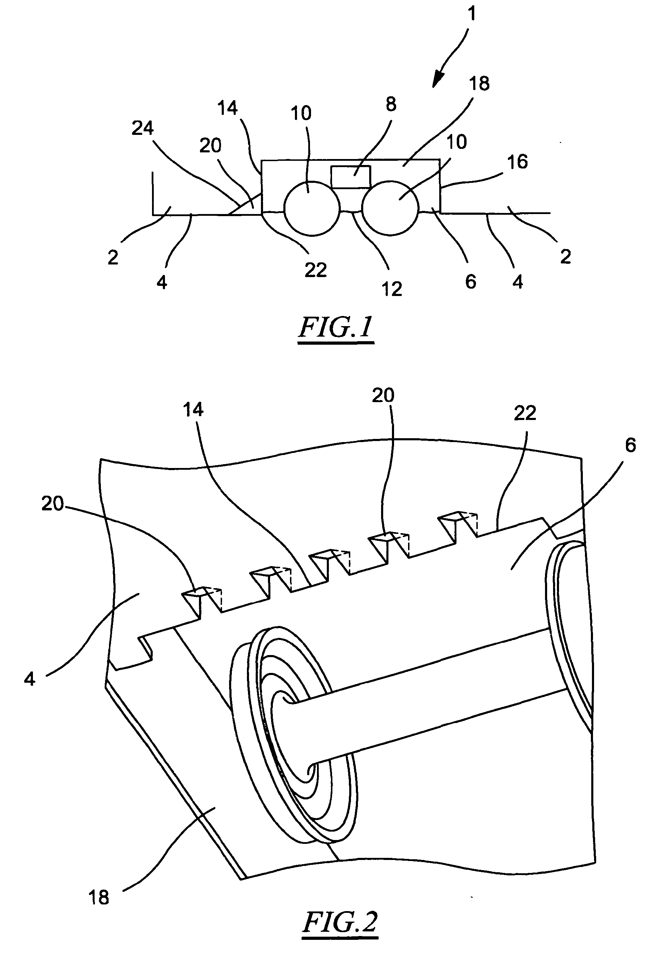

En référence à la Figure 1, on décrit un véhicule ferroviaire 1 comprenant un châssis 2 qui forme la partie inférieure du véhicule ferroviaire. Le châssis présente une surface inférieure 4 sensiblement horizontale et destinée à s'étendre en regard des rails sur lesquels circule le véhicule ferroviaire 1.

Le châssis 2 comprend une cavité 6, formée à partir de la surface inférieure 4, à une partie extrême longitudinale du véhicule ferroviaire 1. Cette cavité 6 permet de recevoir un bogie 8 supportant le châssis 2. Une cavité similaire est également prévue à l'autre partie extrême longitudinale du véhicule ferroviaire afin de recevoir un autre bogie. Pour des raisons de simplicité, seule une cavité 6 sera décrite ici. Un ou des essieux sont montés en rotation sur le bogie 8, ces essieux portant les roues 10 du véhicule ferroviaire 1, comme représenté sur la Figure 1.

La cavité 6 présente une forme sensiblement parallélépipédique et comprend une ouverture inférieure 12 de passage des roues 10 à partir de laquelle s'étendent deux parois sensiblement verticales, à savoir une paroi amont 14, une paroi aval 16. Accessoirement, deux parois latérales 18 peuvent également être présentes, entre les parois amont et aval, avec une étendue verticale variable selon le type de véhicule ferroviaire, ces parois latérales sont communément appelées « carénage de bogie ». Les parois amont 14 et aval 16 s'étendent selon une direction sensiblement transversale. Le bogie 8 s'étend parallèlement à ces parois et entre celles-ci. Les parois latérales 18 s'étendent selon une direction sensiblement longitudinale, de la paroi amont 14 à la paroi aval 16.

Le châssis 2 comprend un dispositif de perturbation modifiant la forme de la cavité 6 ou le voisinage de celle-ci. Le dispositif est agencé pour modifier les flux d'air tourbillonnants se formant dans la cavité 6 lors du déplacement du véhicule ferroviaire. Un exemple d'un tel dispositif de perturbation, représenté sur les Figures 1 et 2, va à présent être décrit.

La paroi amont 14, à savoir la paroi qui est la plus proche de l'avant du véhicule ferroviaire, comprend des encoches 20 réparties le long de la paroi amont 14. Ces encoches 20 s'étendent selon une direction sensiblement longitudinale et traversent le bord inférieur 22 de ladite paroi amont de sorte à créer des discontinuités dans ce bord inférieur 22, comme représenté sur la Figure 2. Les encoches 20 présentent une section de forme sensiblement triangulaire, comme représenté sur la Figure 1 ; c'est-à-dire qu'elles s'étendent à partir de la surface inférieure 4 et débouchent plus haut dans la paroi amont 14 de sorte à supprimer la continuité de l'arête vive formée par le coin entre la surface inférieure 4 et le bord inférieur 22 de la paroi amont 14. Chaque encoche 20 comprend donc une paroi oblique 24 s'étendant de la surface inférieure 4 à la paroi amont 14. Selon le mode de réalisation représenté sur la Figure 2, le dispositif de perturbation comprend cinq encoches 20, qui présentent chacune une longueur généralement comprise entre 50 et 200 mm. Selon un mode de réalisation, la longueur est de l'ordre de 100 mm ou plus.

Ces encoches 20 permettent, en supprimant la continuité de l'arête formée par le bord inférieur 22 de la paroi amont, de briser les « lâchers tourbillonnaires » cohérents et énergétiques formés lors de la circulation du véhicule ferroviaire 1. Ces lâchers tourbillonnaires sont générés par le flux d'air circulant sous le châssis 2 en pénétrant dans la cavité 6 lorsque le véhicule ferroviaire circule, produisant ainsi des nuisances sonores.

Selon un mode de réalisation, seule la cavité 6 disposée à la partie extrême avant du véhicule ferroviaire 1 comprend un tel dispositif de perturbation. Selon un autre mode de réalisation, les deux cavités comprennent chacune un tel dispositif de perturbation.

Selon un mode de réalisation non représenté, le châssis 2 comprend un dispositif de perturbation sous la forme d'un matériau fortement rugueux disposé sur la surface inférieure 4 du châssis au voisinage de la paroi amont 14. Ce matériau crée également des perturbations dans le flux d'air circulant sous le châssis modifiant les lâchers tourbillonnaires dans la cavité 6. Une telle surface rugueuse peut être utilisée seule ou en combinaison avec les encoches 20 mentionnées ci-dessus.

Selon un autre mode de réalisation non représenté, un ou plusieurs éléments de forme sensiblement prismatique font saillie de la surface inférieure 4 de sorte à supprimer la continuité de l'arête formée par le bord inférieur 22. Ces éléments sont répartis transversalement de manière sensiblement régulière et présentent par exemple une longueur de l'ordre de 100 mm. De tels éléments ont également pour effet de modifier les lâchers tourbillonnaires formés dans la cavité 6 lors de la circulation du véhicule ferroviaire. Ce ou ces éléments confèrent au bord inférieur 22 une forme similaire à des créneaux.

L'invention décrite ci-dessus permet de réduire efficacement les bruits générés dans la cavité 6 de réception d'un bogie en intervenant sur l'écoulement d'air dans la cavité lors de la circulation du véhicule ferroviaire plutôt qu'en cherchant à absorber le bruit après qu'il ait été généré. Ainsi, selon l'invention, la source du bruit d'origine aérodynamique est supprimée. Cette invention est particulièrement avantageuse puisqu'elle ne nécessite pas l'ajout de matériaux d'absorption acoustique à la cavité de réception du bogie. Ainsi, aucun apport de masse sur le véhicule ferroviaire n'est nécessaire pour réduire efficacement les nuisances sonores provoquées par la circulation du véhicule ferroviaire. En outre, les coûts et le temps de fabrication sont réduits.

## Revendications

1. Véhicule ferroviaire comprenant un châssis (2) comprenant au moins une cavité (6) destinée à recevoir un bogie (8) de support du véhicule ferroviaire (1), ledit bogie (8) étant destiné à s'étendre sensiblement transversalement dans ladite cavité (6), le châssis (2) comprenant au moins un dispositif de perturbation agencé pour modifier les flux d'air tourbillonnants se formant dans la cavité (6) lors du déplacement du véhicule ferroviaire, la cavité (6) comprenant au moins une paroi amont (14) et une paroi aval (16) selon le sens de déplacement du véhicule ferroviaire, lesdites parois (14, 16) étant sensiblement verticales et s'étendant sensiblement transversalement, le bogie étant destiné à être disposé entre lesdites parois (14, 16), le dispositif de perturbation comprenant au moins une encoche (20) pratiquée dans la paroi amont (14), ladite encoche (20) s'étendant selon une direction sensiblement longitudinale et traversant le bord inférieur (22) de ladite paroi amont (14), **caractérisé en ce que** l'encoche (20) s'étend à partir d'une surface inférieure (4) sensiblement horizontale formant un coin avec le bord inférieur (22) de la paroi amont (14), ladite encoche (20) débouchant dans la paroi amont (14) de sorte à supprimer la continuité de l'arête vive formée par ledit coin.

2. Véhicule ferroviaire selon la revendication 1, **caractérisé en ce que** l'encoche (20) présente une longueur sensiblement comprise entre 50 mm et 200 mm.

3. Véhicule ferroviaire selon la revendication 2, **caractérisé en ce que** l'encoche (20) présente une longueur de l'ordre de 100 mm.

4. Véhicule ferroviaire selon l'une quelconque des revendications 1 à 3, **caractérisé en ce que** le dispositif comprend une pluralité d'encoches (20) réparties dans la paroi amont (14).

5. Véhicule ferroviaire selon l'une quelconque des revendications 1 à 4, **caractérisé en ce que** le dispositif de perturbation comprend une surface rugueuse prévue sur la surface inférieure (4) du châssis (2) au voisinage de la paroi amont (14).

6. Véhicule ferroviaire selon l'une quelconque des revendications 1 à 5, **caractérisé en ce que** le dispositif de perturbation comprend au moins un élément faisant saillie de la surface inférieure (4) du châssis (2) au voisinage de la paroi amont (14).

7. Véhicule ferroviaire selon la revendication 6, **caractérisé en ce que** le dispositif de perturbation comprend une pluralité d'éléments faisant saillie de la surface inférieure (4) du châssis (2) au voisinage de la paroi amont (14), de sorte à conférer une forme similaire à des créneaux au bord inférieur (22) de la paroi amont (14).

## Patentansprüche

1. Eisenbahnfahrzeug mit einem Chassis (2), welches wenigstens eine Kavität (6) aufweist, die dazu bestimmt ist, um ein Laufdrehgestell (8) des Eisenbahnfahrzeugs (1) aufzunehmen, wobei das Drehgestell (8) dazu bestimmt ist, sich im Wesentlichen quer in der Kavität (6) zu erstrecken, wobei das Chassis (2) wenigstens eine Störgrößenvorrichtung aufweist, die eingerichtet ist, um die turbulenten Luftströme zu modifizieren, die sich in der Kavität (6) bilden, wenn das Eisenbahnfahrzeug fährt, wobei die Kavität (6) in Fahrrichtung des Eisenbahnfahrzeugs gesehen wenigstens eine vorlaufende Wand (14) und eine nachlaufende Wand (16) aufweist, wobei die Wände (14, 16) im Wesentlichen vertikal sind und sich im Wesentlichen quer erstrecken, wobei das Drehgestell dazu bestimmt ist, um zwischen den Wänden (14, 16) angeordnet zu sein, wobei die Störgrößenvorrichtung wenigstens eine Nut (20) aufweist, welche in der vorlaufenden Wand (14) ausgebildet ist, wobei die Nut (20) sich im Wesentlichen in Längsrichtung erstreckt und den unteren Rand (22) der vorlaufenden Wand (14) durchquert, **dadurch gekennzeichnet, dass** die Nut (20) sich ausgehend von einer im Wesentlichen horizontalen, unteren Fläche (4) erstreckt unter Ausbildung eines Ecks mit dem unteren Rand (22) der vorlaufenden Wand (14), wobei die Nut (20) in der vorlaufenden Wand (14) ausmündet in einer Weise, so dass die Kontinuität der Scharfkante, die von dem Eck gebildet ist, beseitigt ist.

2. Eisenbahnfahrzeug gemäß Anspruch 1, **dadurch gekennzeichnet, dass** die Nut (20) eine Länge hat, die im Wesentlichen zwischen 50mm und 200mm liegt.

3. Eisenbahnfahrzeug gemäß Anspruch 2, **dadurch gekennzeichnet, dass** die Nut (20) eine Länge hat, die etwa 100mm beträgt.

4. Eisenbahnfahrzeug gemäß irgendeinem der Ansprüche 1 bis 3, **dadurch gekennzeichnet, dass** die Vorrichtung eine Mehrzahl von Nuten (20) aufweist, die in der vorlaufenden Wand (14) verteilt sind.

5. Eisenbahnfahrzeug gemäß irgendeinem der Ansprüche 1 bis 4, **dadurch gekennzeichnet, dass** die Störgrößenvorrichtung eine raue Oberfläche hat, die an der unteren Fläche (4) des Chassis (2) benachbart zu der vorlaufenden Wand (14) vorgesehen ist.

6. Eisenbahnfahrzeug gemäß irgendeinem der Ansprüche 1 bis 5, **dadurch gekennzeichnet, dass** die Störgrößenvorrichtung wenigstens ein von der unteren Fläche (4) des Chassis (2) benachbart zu der vorlaufenden Wand (14) vorstehendes Element aufweist.

7. Eisenbahnfahrzeug gemäß Anspruch 6, **dadurch gekennzeichnet, dass** die Störgrößenvorrichtung benachbart zu der vorlaufenden Wand (14) eine Mehrzahl von von der unteren Fläche (4) des Chassis (2) vorstehenden Elementen aufweist, um dem unteren Rand (22) der vorlaufenden Wand (14) eine Form zu verliehen, die Zinnen ähnlich ist.

## Claims

1. Railway vehicle comprising a chassis (2), having at least one cavity (6) designed to accommodate a bogie (8) for supporting the railway vehicle (1), said bogie (8) being designed to extend essentially transversely in said cavity (6), the chassis (2) having at least one disrupter device designed to modify the swirling air flows generated in the cavity (6) during displacement of the railway vehicle, the cavity (6) having at least an upstream wall (14) and a downstream wall (16) relative to the direction of displacement of the railway vehicle, said walls (14, 16) being essentially vertical and extending essentially transversely, the bogie being designed to be disposed between said walls (14, 16), the disrupter device comprising at least one notch (20) formed in the upstream wall (14), said notch (20) extending in an essentially longitudinal direction and traversing the bottom edge (22) of said upstream wall (14), **characterised in that** the notch (20) extends from a bottom, essentially horizontal surface (4) forming a corner with the bottom edge (22) of the upstream wall (14), said notch (20) opening into the upstream wall (14) so as to break the continuity of the sharp edge formed by said corner.

2. Railway vehicle as claimed in claim 1, **characterised in that** the notch (20) is essentially between 50 mm and 200 mm in length.

3. Railway vehicle as claimed in claim 2, **characterised in that** the notch (20) is essentially in the order of 100 mm in length.

4. Railway vehicle as claimed in any one of claims 1 to 3, **characterised in that** the device comprises a plurality of notches (20) distributed in the upstream wall (14).

5. Railway vehicle as claimed in any one of claims 1 to 4, **characterised in that** the disrupter device comprises a rough surface disposed on the bottom surface (4) of the chassis (2) in the vicinity of the upstream wall (14).

6. Railway vehicle as claimed in any one of claims 1 to 5, **characterised in that** the disrupter device comprises at least one element protruding from the bottom surface (4) of the chassis (2) in the vicinity of the upstream wall (14).

7. Railway vehicle as claimed in claim 6, **characterised in that** the disrupter device comprises a plurality of elements protruding from the bottom surface (4) of the chassis (2) in the vicinity of the upstream wall (14) so as to impart to the bottom edge (22) of the upstream wall (14) a shape akin to crenels.
